# EUROPEAN PATENT APPLICATION

(11) **EP 4 059 763 A1**
(43) Date of publication of application: **21.09.2022**
(21) Application number: 22160334.3
(22) Date of filing: 04.03.2022
(51) Int. Cl.: B60L 50/50, H02J 7/00

(54) **CHARGE/DISCHARGE CONTROL DEVICE WITH PRE-CHARGING FOR AN ELECTRIC VEHICLE**

(30) Priority: 15.03.2021 JP 2021041562
(71) Applicant: Suzuki Motor Corporation, Hamamatsu-shi, Shizuoka 432-8611 (JP)
(72) Inventor: Watanabe, Koichiro, Hamamatsu-shi, 432-8611 (JP); Kato, Hirotaka, Hamamatsu-shi, 432-8611 (JP); Chuma, Akihiro, Hamamatsu-shi, 432-8611 (JP)
(74) Representative: Henkel & Partner mbB

(57) **Abstract**

[Obj ect]

Provided is a charge/discharge control device capable of suppressing a driver from feeling a sense of discomfort caused when an ignition off timing and a contactor off timing are different.

[Solution]

A charge/discharge control device includes: a high-voltage battery 4 corresponding to a main power supply; an inverter 3 which drives a motor 2 by receiving electric power supplied from the high-voltage battery 4; a negative electrode side contactor 42 and a positive electrode side contactor 43 which connects and disconnects an electrical connection between the high-voltage battery 4 and the inverter 3; and a contactor switching control unit 5 which switches a connection/disconnection state between the negative electrode side contactor 42 and the positive electrode side contactor 43 and switches the negative electrode side contactor 42 and the positive electrode side contactor 43 to an off state at the same time when an ignition switch 51 of a vehicle 1 is turned off.

## Description

### [Technical Field]

This invention relates to a charge/discharge control device.

### [Background of the Invention]

Generally, when a high-voltage battery and a high-voltage device are electrically connected via a contactor, a main contactor which electrically connects and disconnects the high-voltage battery and the high-voltage device and a precharge circuit which is connected in parallel to the main contactor are provided. This precharge circuit includes a precharge resistance and a precharge contactor which are connected in series to each other. In such a circuit, a precharge is started by turning on the precharge contactor at the same time when an ignition switch is turned on and an inrush current is suppressed from being generated by turning on the main contactor after the precharge is completed.

Patent Literature 1 describes a technique capable of starting a vehicle when needed while reliably dissipating heat from an inrush limit resistance by maintaining a main relay and a ground relay in an on state if a specified time does not elapse from the on timing of the main relay when a stop command signal is received from a key switch.

### [Prior Art]

### [Patent Literature]

[Patent Literature 1] JP 2011-114974 A

### [Summary of the Invention]

### [Problem to be solved by the Invention]

However, in such a technique, since the main relay and the ground relay are maintained in an on state until the heat dissipation of the inrush limit resistance is completed, the off operation sound of the main relay and the ground relay is loud when the timing of turning off the key switch and the timing of turning off the main relay and the ground relay are different. As a result, there is a risk that a driver may feel a sense of discomfort.

For example, if the key switch is turned off when a specified time does not elapse since the key switch is turned on and the main relay is turned on, the main relay and the ground relay are turned off after the key switch is turned off.

Here, an object of this invention is to provide a charge/discharge control device capable of suppressing a driver from feeling a sense of discomfort caused when an ignition off timing and a contactor off timing are different.

### [Means to solve the problem]

In order to attain the above-mentioned objects, according to aspects of this invention, there is provided a charge/discharge control device for a vehicle including a high-voltage battery corresponding to a main power supply, an inverter driving a motor by receiving electric power supplied from the high-voltage battery, and a contactor connecting and disconnecting an electrical connection between the high-voltage battery and the inverter, including: a contactor switching control unit switching a connection/disconnection state of the contactor, wherein the contactor switching control unit switches the contactor to an off state at the same time when an ignition switch of the vehicle is turned off.

### [Effect of the Invention]

In this way, according to this invention, it is possible to suppress a driver from feeing a sense of discomfort caused when an ignition off timing and a contactor off timing are different.

### [Brief description of figures]

[Fig. 1] Fig. 1 is a schematic configuration diagram of a charge/discharge control device according to an embodiment of this invention.
[Fig. 2] Fig. 2 is a flowchart showing a procedure of a charge/discharge control process of the charge/discharge control device according to an embodiment of this invention.
[Fig. 3] Fig. 3 is a timing chart showing a timing of adding and resetting an overheat protection counter by the charge/discharge control process of the charge/discharge control device according to an embodiment of this invention.
[Fig. 4] Fig. 4 is a timing chart showing a case in which the overheat protection counter by the charge/discharge control process of the charge/discharge control device according to an embodiment of this invention becomes a predetermined value.

### [Embodiment(s) of the Invention]

A charge/discharge control device according to embodiments of this invention is a charge/discharge control device for a vehicle including a high-voltage battery corresponding to a main power supply, an inverter driving a motor by receiving electric power supplied from the high-voltage battery, and a contactor connecting and disconnecting an electrical connection between the high-voltage battery and the inverter, including: a contactor switching control unit switching a connection/disconnection state of the contactor, wherein the contactor switching control unit switches the contactor to an off state at the same time when an ignition switch of the vehicle is turned off.

Accordingly, the charge/discharge control device according to embodiments of this invention can suppress a driver from feeling a sense of discomfort caused when an ignition off timing and a contactor off timing are different.

### [Embodiments]

Hereinafter, a charge/discharge control device according to embodiments of this invention will be described in detail with reference to the drawings.

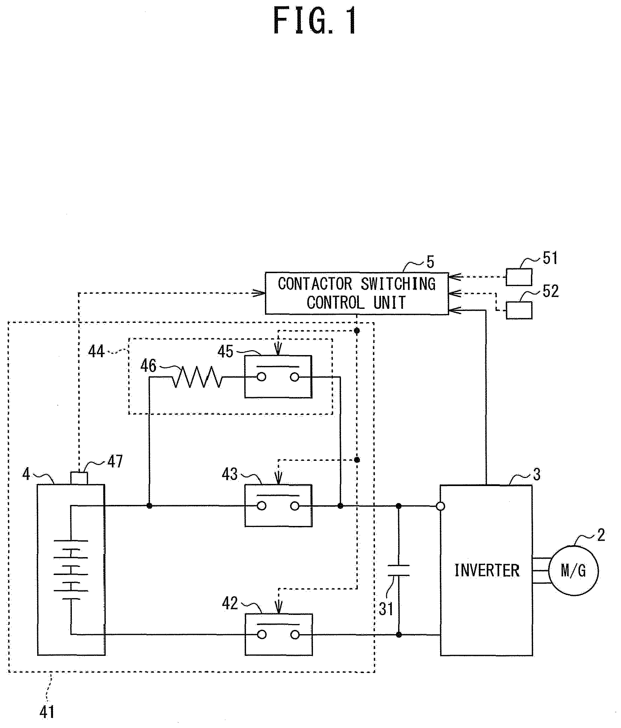

In Fig. 1, a vehicle 1 equipped with a charge/discharge control device according to embodiments of this invention includes a motor 2, an inverter 3, a high-voltage battery 4, and a contactor switching control unit 5.

The motor 2 is configured as, for example, a synchronous motor including a rotor in which a plurality of permanent magnets are embedded and a stator on which a stator coil is wound. In the motor 2, a rotating magnetic field is formed in the stator by applying three-phase AC power to the stator coil and the rotor rotates by the rotating magnetic field to generate a driving force.

Further, the motor 2 is driven to use the rotational resistance during power generation for braking the vehicle 1. Accordingly, the motor 2 has a function capable of generating electric power by regeneration. In this way, the motor 2 also functions as a generator and can generate electric power for charging the high-voltage battery 4.

The inverter 3 supplies three-phase AC power to the motor 2. Further, the inverter 3 converts the three-phase AC power generated by the motor 2 into DC power to charge the high-voltage battery 4.

A smoothing capacitor 31 is connected between the positive electrode and the negative electrode of the input terminal connecting the inverter 3 and the high-voltage battery 4. The smoothing capacitor 31 smoothes the voltage of DC power generated between the positive electrode and the negative electrode.

The high-voltage battery 4 is composed of, for example, a nickel storage battery, a lithium storage battery, or the like and is configured by connecting a plurality of cells in series. The high-voltage battery 4 supplies electric power to the motor 2 via the inverter 3.

The high-voltage battery 4 is accommodated in, for example, a sealed battery pack 41. The battery pack 41 is disposed, for example, outside the vehicle interior of the lower part of the vehicle body of the vehicle 1. The battery pack 41 is provided with a temperature sensor 47 which detects a temperature inside the battery pack 41. The temperature sensor 47 is connected to the contactor switching control unit 5.

A negative electrode side contactor 42 which is a contactor is provided on the negative electrode side between the inverter 3 and the high-voltage battery 4. A positive electrode side contactor 43 which is a contactor is provided on the positive electrode side between the inverter 3 and the high-voltage battery 4. A precharge circuit 44 in which a precharge contactor 45 and a precharge resistance 46 are connected in series is connected to the positive electrode side contactor 43 in parallel to the positive electrode side contactor 43.

The negative electrode side contactor 42 and the positive electrode side contactor 43 take any one of an on state in which the inverter 3 and the high-voltage battery 4 are electrically connected and an off state in which the inverter 3 and the high-voltage battery 4 are electrically disconnected in response to the control of the contactor switching control unit 5.

The precharge contactor 45 takes any one of an on state in which the precharge resistance 46 is connected in parallel to the positive electrode side contactor 43 and an off state in which the precharge resistance 46 is electrically disconnected from the positive electrode side contactor 43 in response to the control of the contactor switching control unit 5.

For example, the precharge contactor 45 is controlled to take an on state before the motor 2 is operated and to take an off state after the positive electrode side contactor 43 becomes an on state.

The negative electrode side contactor 42, the positive electrode side contactor 43, and the precharge contactor 45 are arranged, for example, in the battery pack 41.

The contactor switching control unit 5 is configured as a computer unit including a CPU (Central Processing Unit), a RAM (Random Access Memory), a ROM (Read Only Memory), an input port, and an output port.

The ROM of the contactor switching control unit 5 stores a program for causing the computer unit to function as the contactor switching control unit 5 together with various control constants and various maps. That is, when the CPU executes the program stored in the ROM, the computer unit functions as the contactor switching control unit 5.

Various sensors including an ignition switch 51 and an outside air temperature sensor 52 are connected to the input port of the contactor switching control unit 5 in addition to the temperature sensor 47.

The ignition switch 51 detects whether or not the system of the vehicle 1 has been activated and transmits the detection result to the contactor switching control unit 5. The ignition switch 51 is switched to any one of an on state in which the system of the vehicle 1 is activated and an off state in which the system of the vehicle 1 is stopped and transmits that state to the contactor switching control unit 5. The outside air temperature sensor 52 detects the temperature of the outside air around the vehicle 1.

On the other hand, various control objects including the negative electrode side contactor 42, the positive electrode side contactor 43, and the precharge contactor 45 are connected to the output port of the contactor switching control unit 5.

In this embodiment, the contactor switching control unit 5 switches the negative electrode side contactor 42 and the positive electrode side contactor 43 to an off state at the same time when the ignition switch 51 is turned off.

The contactor switching control unit 5 executes an increment of adding 1 to the overheat protection counter when the ignition switch 51 is turned on after the precharge contactor 45 is turned off.

When the overheat protection counter is smaller than a predetermined value, the contactor switching control unit 5 switches the negative electrode side contactor 42 and the positive electrode side contactor 43 to an off state at the same time when the ignition switch 51 is turned off.

When the overheat protection counter is equal to or larger than the predetermined value, the contactor switching control unit 5 maintains the negative electrode side contactor 42 and the positive electrode side contactor 43 in an on state even when the ignition switch 51 is turned off until a predetermined time elapses since the precharge contactor 45 is turned off.

The contactor switching control unit 5 resets the overheat protection counter to 0 when the predetermined time elapses since the precharge contactor 45 is turned off.

The contactor switching control unit 5 may stop the increment of the overheat protection counter until a predetermined time elapses since the overheat protection counter is equal to or larger than the predetermined value and the precharge contactor 45 is turned off.

The contactor switching control unit 5 may execute the increment of the overheat protection counter when the ignition switch 51 is turned on within a predetermined time after the precharge contactor 45 is turned off.

The contactor switching control unit 5 shortens the predetermined time as the temperature inside the battery pack 41 decreases.

The contactor switching control unit 5 shortens the predetermined time as the outside air temperature decreases.

A predetermined time of executing the increment of the overheat protection counter and a predetermined time of maintaining the negative electrode side contactor 42 and the positive electrode side contactor 43 in an on state may be different lengths of time.

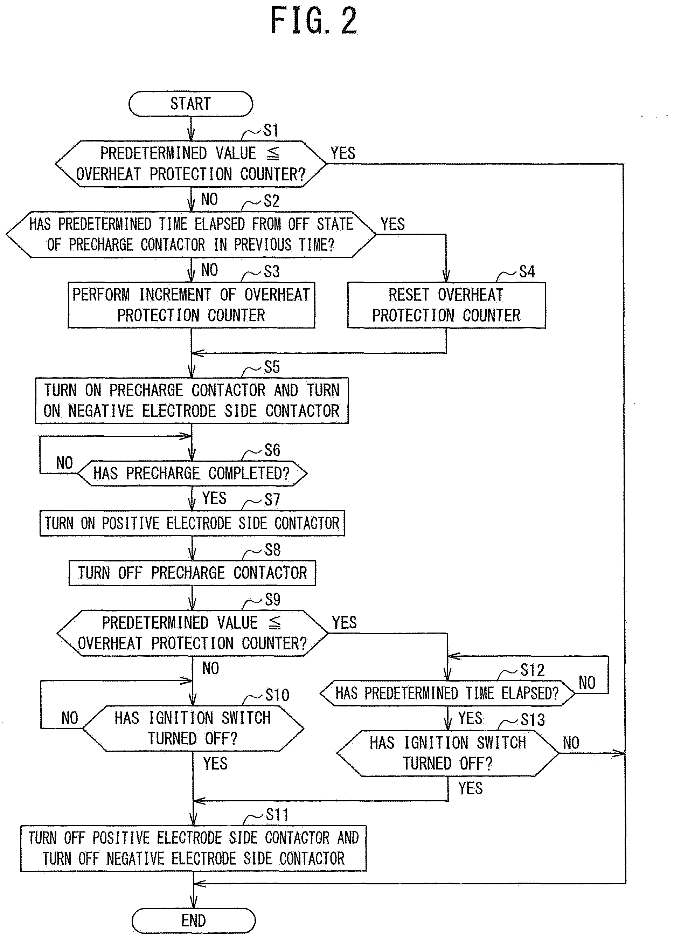

A charge/discharge control process using the charge/discharge control device according to this embodiment with the above-described configuration will be described with reference to Fig. 2. Additionally, the charge/discharge control process to be described below is started when the ignition switch 51 is turned on.

In step S1, the contactor switching control unit 5 determines whether or not the overheat protection counter is equal to or larger than a predetermined value.

When it is determined that the overheat protection counter is equal to or larger than the predetermined value, the contactor switching control unit 5 ends the charge/discharge control process. When it is determined that the overheat protection counter is not equal to or larger than the predetermined value, the contactor switching control unit 5 executes the process of step S2.

In step S2, the contactor switching control unit 5 determines whether or not a predetermined time elapses since the precharge contactor 45 is turned off in the previous time.

When it is determined that the predetermined time elapses since the precharge contactor 45 is turned off in the previous time, the contactor switching control unit 5 executes the process of step S4. When it is determined that the predetermined time does not elapse since the precharge contactor 45 is turned off in the previous time, the contactor switching control unit 5 executes the process of step S3.

In step S3, the contactor switching control unit 5 executes the increment of the overheat protection counter. After the process of step S3 is executed, the contactor switching control unit 5 executes the process of step S5.

In step S4, the contactor switching control unit 5 resets the overheat protection counter. After the process of step S4 is executed, the contactor switching control unit 5 executes the process of step S5.

In step S5, the contactor switching control unit 5 turns on the precharge contactor 45 and turns on the negative electrode side contactor 42. After the process of step S5 is executed, the contactor switching control unit 5 executes the process of step S6.

In step S6, the contactor switching control unit 5 determines whether or not the precharge is completed.

When it is determined that the precharge is completed, the contactor switching control unit 5 executes the process of step S7. When it is determined that the precharge is not completed, the contactor switching control unit 5 executes the process of step S6.

In step S7, the contactor switching control unit 5 turns on the positive electrode side contactor 43. After the process of step S7 is executed, the contactor switching control unit 5 executes the process of step S8.

In step S8, the contactor switching control unit 5 turns off the precharge contactor 45. After the process of step S8 is executed, the contactor switching control unit 5 executes the process of step S9.

In step S9, the contactor switching control unit 5 determines whether or not the overheat protection counter is equal to or larger than a predetermined value.

When it is determined that the overheat protection counter is equal to or larger than the predetermined value, the contactor switching control unit 5 executes the process of step S12. When it is determined that the overheat protection counter is not equal to or larger than the predetermined value, the contactor switching control unit 5 executes the process of step S10.

In step S10, the contactor switching control unit 5 determines whether or not the ignition switch 51 is turned off.

When it is determined that the ignition switch 51 is turned off, the contactor switching control unit 5 executes the process of step S11. When it is determined that the ignition switch 51 is not turned off, the contactor switching control unit 5 executes the process of step S10.

In step S11, the contactor switching control unit 5 turns off the positive electrode side contactor 43 and turns off the negative electrode side contactor 42. After the process of step S11 is executed, the contactor switching control unit 5 ends the charge/discharge control process.

In step S12, the contactor switching control unit 5 determines whether or not a predetermined time elapses.

When it is determined that the predetermined time elapses, the contactor switching control unit 5 executes the process of step S13. When it is determined that the predetermined time does not elapse, the contactor switching control unit 5 executes the process of step S12.

In step S13, the contactor switching control unit 5 determines whether or not the ignition switch 51 is turned off.

When it is determined that the ignition switch 51 is turned off, the contactor switching control unit 5 executes the process of step S11. When it is determined that the ignition switch 51 is not turned off, the contactor switching control unit 5 ends the charge/discharge control process.

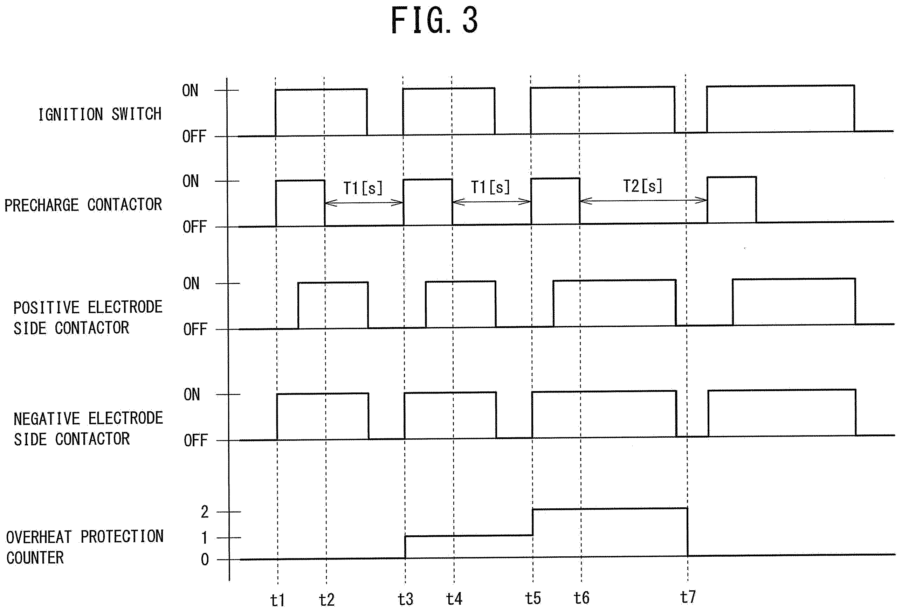

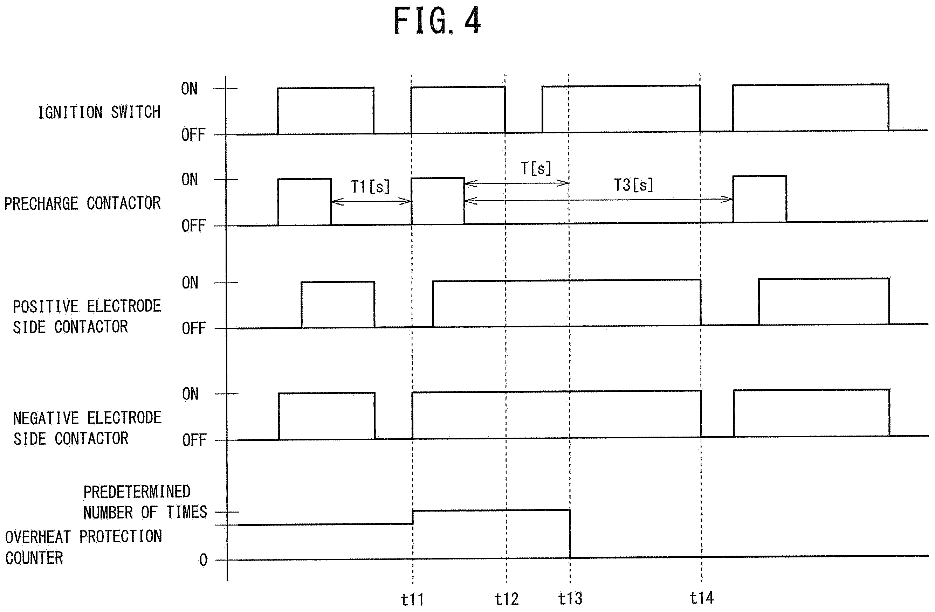

The operation by such combustion stabilization treatment will be described with reference to Figs. 3 and 4.

Fig. 3 is a timing chart showing a timing of adding and resetting the overheat protection counter. Here, a predetermined time is set to T[s].

At the time t1, when the ignition switch 51 is turned on, the precharge contactor 45 and the negative electrode side contactor 42 are turned on and the precharge is started.

After the precharge is completed, the positive electrode side contactor 43 is turned on. At the time t2, the precharge contactor 45 is turned off and timekeeping for a predetermined time is started.

At the time t3, if the ignition switch 51 is turned on when a time T1 shorter than the predetermined time T elapses, the precharge contactor 45 and the negative electrode side contactor 42 are turned on and 1 is added to the overheat protection counter.

After the precharge is completed, the positive electrode side contactor 43 is turned on. At the time t4, the precharge contactor 45 is turned off and timekeeping for a predetermined time is started.

At the time t5, if the ignition switch 51 is turned on when the time T1 shorter than the predetermined time T elapses, the precharge contactor 45 and the negative electrode side contactor 42 are turned on and 1 is added to the overheat protection counter.

After the precharge is completed, the positive electrode side contactor 43 is turned on. At the time t6, the precharge contactor 45 is turned off and timekeeping for a predetermined time is started.

At the time t7, the predetermined time T elapses, the overheat protection counter is reset to 0, and the overheat protection counter is not added even if the ignition switch 51 is turned on when a time T2 longer than the predetermined time T elapses.

Fig. 4 is a timing chart when the overheat protection counter becomes a predetermined value. Again, the predetermined time is set to T[s].

At the time t11, if the ignition switch 51 is turned on when the time T1 shorter than the predetermined time T elapses after the precharge contactor 45 is turned off, the precharge contactor 45 and the negative electrode side contactor 42 are turned on and 1 is added to the overheat protection counter. At this time, the overheat protection counter becomes a predetermined value.

After the precharge is completed, the positive electrode side contactor 43 is turned on, the precharge contactor 45 is turned off, and timekeeping for a predetermined time is started.

At the time t12, the ignition switch 51 is turned off, but a predetermined time does not elapse. Therefore, the positive electrode side contactor 43 and the negative electrode side contactor 42 are maintained in an on state. Then, even when the ignition switch 51 is turned on, a predetermined time does not elapse and the positive electrode side contactor 43 and the negative electrode side contactor 42 are in an on state. Therefore, the precharge contactor 45 is not turned on.

At the time t13, when the predetermined time T elapses, the overheat protection counter is reset to 0.

Then, at the time t14, when the ignition switch 51 is turned off, the positive electrode side contactor 43 and the negative electrode side contactor 42 are turned off since a predetermined time elapses. When the ignition switch 51 is turned on at the time point in which a time T3 longer than the predetermined time T elapses since the precharge contactor 45 is turned off, the precharge contactor 45 and the negative electrode side contactor 42 are turned on and the overheat protection counter is not added.

In this way, in this embodiment, the contactor switching control unit 5 switches the negative electrode side contactor 42 and the positive electrode side contactor 43 to an off state at the same time when the ignition switch 51 is turned off.

Accordingly, since the timing of turning off the ignition switch 51 matches the timing of generating the off operation sound of the negative electrode side contactor 42 and the positive electrode side contactor 43, it is possible to allow a driver to recognize that the off operation sound is generated due to the operation of the ignition switch 51. Therefore, it is possible to suppress the driver from feeling a sense of discomfort caused when the timing of generating the off operation sound is different from the driver's vehicle operation timing.

Further, the contactor switching control unit 5 adds 1 to the overheat protection counter when the ignition switch 51 is turned on after the precharge contactor 45 is turned off, switches the negative electrode side contactor 42 and the positive electrode side contactor 43 to an off state at the same time when the ignition switch 51 is turned off when the overheat protection counter is equal to or smaller than a predetermined value, and maintains the negative electrode side contactor 42 and the positive electrode side contactor 43 in an on state even when the ignition switch 51 is turned off until a predetermined time elapses since the precharge contactor 45 is turned off when the overheat protection counter is equal to or larger than the predetermined value.

Accordingly, the timing of turning off the ignition switch 51 matches the timing of generating the off operation sound of the negative electrode side contactor 42 and the positive electrode side contactor 43 when the number of times of turning on the precharge contactor 45 is smaller than a predetermined value and the precharge contactor 45 is not turned on for a predetermined time when the number of times of turning on the precharge contactor 45 is equal to or larger than the predetermined value. Therefore, it is possible to suppress the driver from feeling a sense of discomfort caused when the timing of generating the off operation sound is different from the driver's vehicle operation timing while suppressing the precharge resistance 46 from being excessively overheated.

Further, the contactor switching control unit 5 executes the increment of the overheat protection counter when the ignition switch 51 is turned on within a predetermined time after the precharge contactor 45 is turned off and resets the overheat protection counter to 0 when the predetermined time elapses.

Since there is a risk that the precharge resistance 46 is more excessively overheated when the precharge contactor 45 is repeatedly turned on and off in a short time, the precharge contactor 45 is prevented from being turned on for a predetermined time. Therefore, it is possible to suppress the driver from feeling a sense of discomfort caused when the timing of generating the off operation sound is different from the driver's vehicle operation timing while suppressing the precharge resistance 46 from being excessively overheated.

Further, the contactor switching control unit 5 shortens the predetermined time as the temperature inside the battery pack 41 decreases.

Since the precharge resistance 46 is more easily cooled as the temperature inside the battery pack 41 decreases, it is possible to shorten a predetermined time until the precharge resistance 46 is cooled. Accordingly, it is possible to increase the frequency that the timing of turning off the ignition switch 51 matches the timing of generating the off operation sound of the negative electrode side contactor 42 and the positive electrode side contactor 43.

Further, the contactor switching control unit 5 shortens the predetermined time as the outside air temperature decreases.

The battery pack 41 in which the negative electrode side contactor 42, the positive electrode side contactor 43, the precharge contactor 45, and the precharge resistance 46 are arranged is a sealed battery pack and is cooled by heat exchange with the outside and further the battery pack 41 is installed outside the vehicle interior at the lower part of the vehicle body. Thus, the battery pack 41 is more cooled as the outside air temperature decreases and a predetermined time until the precharge resistance 46 is cooled can be shortened. Accordingly, it is possible to increase the frequency that the timing of turning off the ignition switch 51 matches the timing of generating the off operation sound of the negative electrode side contactor 42 and the positive electrode side contactor 43.

In this embodiment, an example has been described in which the contactor switching control unit 5 performs various kinds of determination or calculation based on various sensor information, but this invention is not limited thereto. For example, the vehicle 1 may include a communication unit capable of communicating with an external device such as an external server, perform various kinds of determination or calculation by the external device based on detection information of various sensors transmitted from the communication unit, receive the determination result or calculation result by the communication unit, and perform various control using the received determination result or calculation result.

While embodiments of this invention have been described, it is apparent that some artisan could have made changes without departing from the scope of this invention. It is intended that any and all such modifications and equivalents are involved in the appended claims.

### (DESCRIPTION OF REFERENCE NUMERALS)

1 ... Vehicle, 2 ... Motor, 3 ... Inverter, 4 ... High-voltage battery, 5 ... Contactor switching control unit, 31 ... Smoothing capacitor, 41 ... Battery pack, 42 ... Negative electrode side contactor (contactor), 43 ... Positive electrode side contactor (contactor), 44 ... Precharge circuit, 45 ... Precharge contactor, 46 ... Precharge resistance, 47 ... Temperature sensor, 51 ... Ignition switch, 52 ... Outside air temperature sensor

## Claims

1. A charge/discharge control device for a vehicle including a high-voltage battery corresponding to a main power supply, an inverter driving a motor by receiving electric power supplied from the high-voltage battery, and a contactor connecting and disconnecting an electrical connection between the high-voltage battery and the inverter, comprising:
a contactor switching control unit switching a connection/disconnection state of the contactor,
wherein the contactor switching control unit switches the contactor to an off state at the same time when an ignition switch of the vehicle is turned off.

2. The charge/discharge control device according to claim 1, further comprising:
a precharge circuit connected in parallel to the contactor and precharging a smoothing capacitor connected in parallel to the inverter when the ignition switch is turned on,
wherein the precharge circuit includes a precharge resistance limiting a precharge current and a precharge contactor connected in series to the precharge resistance, and
wherein the contactor switching control unit turns off the precharge contactor when the precharge to the smoothing capacitor is completed, adds 1 to an overheat protection counter when the ignition switch is turned on after the precharge contactor is turned off, switches the contactor to an off state at the same time when the ignition switch is turned off when the overheat protection counter is smaller than a predetermined value, and maintains the contactor in an on state even when the ignition switch is turned off until a predetermined time elapses since the precharge contactor is turned off when the overheat protection counter is equal to or larger than the predetermined value.

3. The charge/discharge control device according to claim 2,
wherein the contactor switching control unit adds 1 to the overheat protection counter when the ignition switch is turned on within a predetermined time after the precharge contactor is turned off and resets the overheat protection counter to 0 when a predetermined time elapses.

4. The charge/discharge control device according to claim 2 or 3,
wherein the contactor and the precharge circuit are arranged inside a battery pack accommodating the high-voltage battery, and
wherein the contactor switching control unit shortens the predetermined time as a temperature inside the battery pack decreases.

5. The charge/discharge control device according to claim 4,
wherein the battery pack is disposed outside a vehicle interior of the vehicle.

6. The charge/discharge control device according to claim 5,
wherein the contactor switching control unit shortens the predetermined time as an outside air temperature decreases.
